# EUROPÄISCHE PATENTSCHRIFT

(11) **EP 3 330 540 B1**
(45) Veröffentlichungstag und Bekanntmachung des Hinweises auf die Patenterteilung: **19.06.2019**
(21) Anmeldenummer: 16202189.3
(22) Anmeldetag: 05.12.2016
(51) Int. Cl.: F04B 39/10

(54) **POPPETVENTIL**
POPPET VALVE
SOUPAPE-CHAMPIGNON

(43) Veröffentlichungstag der Anmeldung: 06.06.2018
(73) Patentinhaber: Burckhardt Compression AG, 8404 Winterthur (CH)
(72) Erfinder: SCHULZ, Reiner, 79807 Lottstetten (DE)
(74) Vertreter: Dr. Graf & Partner AG

(56) Entgegenhaltungen:
- EP-A1- 2 703 647
- DE-U1-202014 105 513
- US-A1- 2010 090 149

## Beschreibung

Die Erfindung betrifft ein Poppetventil gemäss dem Oberbegriff von Anspruch 1.

### Stand der Technik

Die Druckschrift US2010/0090149A1 offenbart ein Poppetventil für einen Kolbenkompressor. Dieses Poppetventil weist einen relativ hohen Verschleiss auf. Zudem weist dieses Poppetventil einen relativ hohen Druckverlust auf, erfordert zudem eine relativ grosse Einbauhöhe und ist zudem noch relative träge.

### Darstellung der Erfindung

Aufgabe der Erfindung ist es ein Poppetventil auszugestalten, das vorteilhaftere Betriebseigenschaften aufweist.

Diese Aufgabe wird gelöst mit einem Poppetventil aufweisend die Merkmale von Anspruch 1. Die Unteransprüche 2 bis 15 betreffen weitere, vorteilhafte Ausgestaltungen der Erfindung.

Die Aufgabe wird insbesondere gelöst mit einem Poppetventil umfassend einen Ventilsitzdeckel mit einer Mehrzahl von Einlasskanälen, wobei jeder Einlasskanal in einen Ventilsitz mündet, sowie umfassend eine Mehrzahl von in einer axialen Richtung beweglichen Schliesselementen, wobei jedem Ventilsitz ein Schliesselement zugeordnet ist, und wobei jeder Ventilsitz in axialer Richtung gegenüber liegend dem zugeordneten Schliesselement angeordnet ist, sodass jeder Ventilsitz durch das zugeordnete Schliesselement verschliessbar ist, wobei alle Schliesselemente an einer Schliesselementhaltevorrichtung angeordnet sind, und wobei die Schliesselementhaltevorrichtung derart in axialer Richtung beweglich ist, dass die Schliesselemente zumindest zwei Stellungen einnehmen können, eine Offenstellung, bei welcher die Schliesselemente bezüglich den Ventilsitzen angehoben sind, und eine Geschlossenstellung, bei welcher die Schliesselemente an den Ventilsitzen anliegen.

Das erfindungsgemässe Poppetventil umfasst einen Ventilsitzdeckel mit einer Mehrzahl von Einlasskanälen, wobei jeder Einlasskanal in einen Ventilsitz mündet, und umfasst eine Schliesselementhaltevorrichtung an welcher eine Mehrzahl von Schliesselementen angeordnet sind, wobei jedem Ventilsitz ein separates Schliesselement zugeordnet ist. Vorzugsweise ist die Schliesselementhaltevorrichtung einteilig ausgestaltet, sodass die mit der Schliesselementhaltevorrichtung verbunden Schliesselemente bezüglich dem Ventilsitzdeckel gemeinsam in einer axialen Richtung beweglich angeordnet sind, wobei die Schliesselemente derart bezüglich den Ventilsitzen angeordnet sind, dass jeder Ventilsitz durch ein Schliesselement geöffnet beziehungsweise geschlossen werden kann. In einer weiteren möglichen Ausgestaltung besteht die Schliesselementhaltevorrichtung aus zumindest zwei getrennten Schliesselementhaltevorrichtungsteilen, wobei alle Schliesselement mit der Schliesselementhaltevorrichtung verbunden, vorzugsweise fest verbunden sind. Bei dieser Ausführungsform sind die Schliesselementhaltevorrichtungsteile unabhängig voneinander in axialer Richtung beweglich, entsprechend der Bewegung des jeweiligen Schliesselementhaltevorrichtungsteiles.

In einer bevorzugten Ausführungsform ist die Schliesselementhaltevorrichtung als flächiger, fluiddurchlässiger beziehungsweise strömungsdurchlässiger Träger ausgestaltet, umfassend Zwischenräume zum Durchtritt des durch die Einlasskanäle strömenden Fluides, und umfassend Befestigungsstellen zum Befestigen der Schliesselemente. Die Schliesselementhaltevorrichtung ist beispielsweise als perforierte, sieb- oder geflechtartige Trägerstruktur ausgestaltet. Die Schliesselementhaltevorrichtung beziehungsweise der Träger umfasst eine Mehrzahl von Befestigungsstellen zum Befestigen der Schliesselemente, wobei die Befestigungsstellen beispielsweise mit der perforierten, oder siebartigen oder geflechtartigen Struktur miteinander verbunden sind. Besonders bevorzugt ist die Schliesselementhaltevorrichtung als zweidimensionale Gitterstuktur ausgestaltet, und weist vorzugsweise eine Vielzahl von Streben und Knoten auf, wobei die Streben die Knoten gegenseitig verbinden, wobei an den Knoten vorzugsweise je ein Schliesselemente befestigt ist, und wobei die Schliesselementhaltevorrichtung zwischen den Streben und Knoten eine Vielzahl von Zwischenräumen aufweist. Ein Poppetventil umfassend die zweidimensionale Gitterstruktur weist den Vorteil auf, dass die Bauhöhe von Schliesselementhaltevorrichtung und Schliesselement relativ gering ist, sodass das erfindungsgemässe Poppetventil einen kleinen Totraum aufweist. Die Gitterstruktur mit Zwischenräumen weist den Vorteil auf, dass das durch das Poppetventil strömende Fluid nach dem Austritt aus dem Ventilsitz nur geringfügig abgelenkt wird, sodass das erfindungsgemässe Poppetventil einen geringen Strömungswiderstand aufweist. Die Schliesselemente sind vorteilhafterweise elastisch mit der Schliesselementhaltevorrichtung verbunden beziehungsweise an dieser gelagert, sodass sich das Schliesselement bezüglich der Schliesselementhaltevorrichtung geringfügig in linearer und/oder rotativer Richtung bewegen kann, insbesondere um Fertigungstoleranzen oder einen Verschleiss der Schliesselemente auszugleichen.

In einer vorteilhaften Ausgestaltung des erfindungsgemässen Poppetventils sind die Schliesselemente gegenseitig symmetrisch an der Schliesselementhaltevorrichtung angeordnet, beispielsweise punktsymmetrisch betreffend eine Mittenachse A. Diese symmetrische Anordnung weist den Vorteil auf, dass seitlich auf die Schliesselemente wirkende Kräfte sich gegenseitig ausgleichen, wodurch die Positionierung der Schliesselementhaltevorrichtung relativ zum Ventilsitz, das heisst die Führung, weniger beansprucht wird und zum Beispiel durch Lenkerfedern oder Schraubenfedern auch reibungsfrei erfolgen kann. In einer vorteilhaften Ausgestaltung reichen die Elastizität der Schliesselementhaltevorrichtung und/oder die Elastizität der Verbindungsstelle zwischen Schliesselementhaltevorrichtung und Schliesselement aus, um Toleranzen auszugleichen.

Die Schliesselementhaltevorrichtung ist vorteilhafterweise bezüglich dem Ventilsitzdeckel gefedert angeordnet, zum Beispiel mit entsprechend ausgelegten Lenkerfedern oder durch Schraubenfedern. Diese Federn können auch im Ventilsitz angebracht werden, in Fall von Schraubenfedern zum Beispiel in entsprechenden Bohrungen, und im Fall von Blattfedern zum Beispiel in einem Ringraum aussen am Ventilsitz.

In einer vorteilhaften Ausführungsform sind die Schliesselemente aus einem Kunststoff gefertigt. Dies ergibt den Vorteil, dass das Gesamtgewicht der beweglichen Teile umfassend insbesondere die Schliesselementhaltevorrichtung sowie die Schliesselemente relativ klein ist, und die beweglichen Teile somit eine geringe Massenträgheit aufweisen, sodass während dem Betrieb des erfindungsgemässen Poppetventils geringere Kräfte auftreten, was den Verschleiss reduziert. Dies ist insbesondere für Poppetventile von Vorteil, die mit höherer Geschwindigkeit, beispielsweise mit 30 Schliesszyklen pro Sekunde betrieben werden. Die Schliesselemente können auch aus einem Metall oder aus einer Kombination von Metall und Kunststoff gefertigt sein. Ein Schliesselement bestehend aus einer Kombination von Metall und Kunststoff weist den Vorteil auf, dass die Teile, welche mit dem Ventilsitz in Berührung kommen, aus Kunststoff gefertigt sein können, und daher einen geringeren Abrieb am Ventilsitz bewirken, und dass das Metall eine Stützfunktion ausübt, um den Kunststoff in einer vorteilhaften Lage zu halten.

Das erfindungsgemässe Poppetventil kann kostengünstig gewartet werden, indem nur diejenigen Schliesselemente ersetzt werden, welche verschlissen sind, wogegen die übrigen Schliesselemente weiterverwendet werden können. Das erfindungsgemässe Poppetventil kann auch sehr schnell gewartet werden, indem die Schliesselementhaltevorrichtung und alle daran befestigten Schliesselemente gemeinsam ersetzt werden durch eine neuwertige Anordnung. Da die Schliesselementhaltevorrichtung sowie die daran befestigten Schliesselemente sehr kostengünstig herstellbar sind, ist es auch kostengünstig, die gesamte Anordnung umfassend die Schliesselementhaltevorrichtung sowie die daran befestigten Schliesselemente gesamthaft zu ersetzen. Zudem kann das Entfernen und Ersetzen der Anordnung im erfindungsgemässen Poppetventil sehr schnell und kostengünstig erfolgen. Dies ist insbesondere auch dann vorteilhaft, wenn das geförderte Fluid Verschmutzungen aufweist, was einen erhöhten Verschleiss der Schliesselemente zur Folge hat.

Bekannte Poppetventile weisen eine geringe Anzahl von Schliesselementen auf. Das erfindungsgemässe Poppetventil weist den Vorteil auf, dass die Schliesselementhaltevorrichtung auf einfache Weise derart ausgestaltet werden kann, dass an dieser eine Vielzahl von Schliesselementen befestigbar ist, zum Beispiel 15, 20, 30 oder 40 Schliesselemente, indem der maximale Aussendurchmesser der Schliesselemente entsprechend reduziert wird, und die Knoten an der Schliesselementhaltevorrichtung entsprechend angeordnet werden. Der Ventilsitzdeckel dieser Ausführungsform weist gegenüber herkömmlichen Poppetventilen eine höhere Anzahl Einlasskanäle auf, sodass sich die Gesamtdurchtrittsfläche auf eine grössere Anzahl von Kanälen aufteilt, was den Vorteil ergibt, dass der Ventilsitzdeckel eine grössere Festigkeit aufweist und/oder was den Vorteil ergibt, dass zum Öffnen und Schliessen der Kanäle auf Grund des kleineren Durchmessers ein geringerer Hub der Schliesselemente erforderlich ist. Dieser geringere Hub ergibt insbesondere den Vorteil, dass die Schliesselemente mit einer höheren Anzahl Zyklen pro Sekunde betrieben werden könnten. Vorzugsweise weisen die Schliesselemente einen deutlich grösseren Durchmesser auf als die Verbindungsteile, welche jedes Schliesselement mit der Schliesselementhaltevorrichtung verbinden. Diese Ausgestaltung weist den Vorteil auf, dass das Verbindungsteil den Strömungsquerschnitt jedes Ventilsitzes bzw. des zugeordneten Schliesselementes vorzugsweise nicht oder vernachlässigbar geringfügig beeinflusst. Das erfindungsgemässe Poppetventil weist somit einen geringeren Strömungswiderstand auf.

Das erfindungsgemässe Poppetventil weist gegenüber herkömmlichen Poppetventilen in einer vorteilhaften Ausgestaltung den Vorteil auf, dass dieses bei vorgegebener Gesamtbauhöhe für höhere Drücke verwendbar ist, da die Schliesselementhaltevorrichtung sowie die daran befestigten Schliesselemente eine geringere Bauhöhe erfordern, sodass der Ventilsitzdeckel entsprechend dicker und dadurch druckresistenter ausgestaltet werden kann.

Die Erfindung wird nachfolgend an Hand von Ausführungsbeispielen im Detail beschrieben.

### Kurze Beschreibung der Zeichnungen

Die zur Erläuterung der Ausführungsbeispiele verwendeten Zeichnungen zeigen:
- Fig. 1: ein erstes Ausführungsbeispiel eines Poppetventils, teilweise im Schnitt;
- Fig. 2: das Poppetventil gemäss Figur 1;
- Fig. 3: eine Explosionszeichnung des Poppetventils gemäss Figur 1;
- Fig. 4: ein Schliesselement im Schnitt;
- Fig. 5: eine Detailansicht des Poppetventils gemäss Figur 1;
- Fig. 6: eine Anordnung der Schliesselemente;
- Fig. 7: eine Explosionszeichnung eines zweiten Ausführungsbeispiels eines Poppetventils;
- Fig. 8: einen Längsschnitt durch das Poppetventil gemäss Figur 7;
- Fig. 9: ein weiteres Ausführungsbeispiel eines Schliesselementes;
- Fig. 10: einen Längsschnitt durch das zusammengebaute Schliesselement gemäss Figur 9;
- Fig. 11: einen Längsschnitt durch das Poppetventil gemäss Figur 7;
- Fig. 12, 13: zweite weitere Ausführungsbeispiele von Schliesselementhaltevorrichtungen.

Grundsätzlich sind in den Zeichnungen gleiche Teile mit gleichen Bezugszeichen versehen.

### Wege zur Ausführung der Erfindung

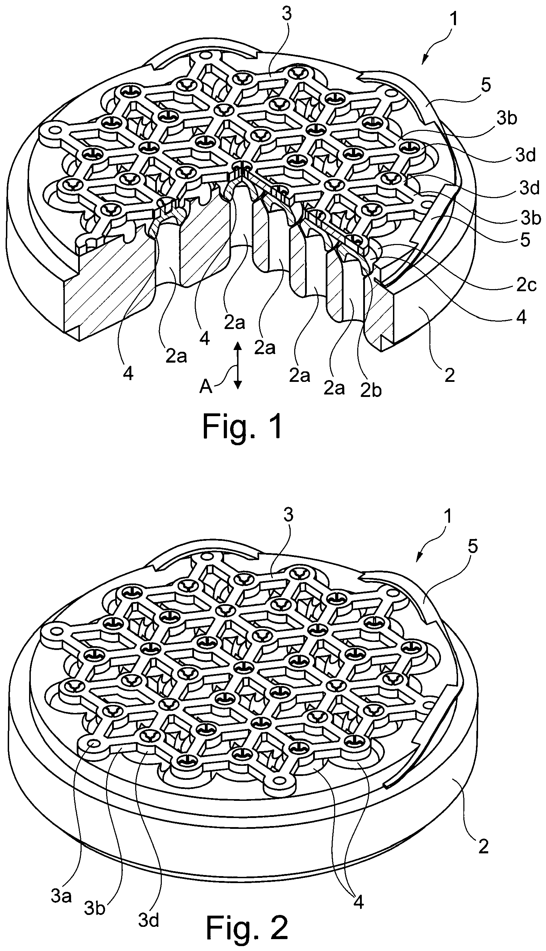

Figur 1 zeigt ein erstes Ausführungsbeispiel eines Poppetventils 1, teilweise im Schnitt. Der Ventilsitzdeckel 2 umfasst eine Mehrzahl von in einer axialen Richtung A verlaufenden Einlasskanälen 2a, welche in einen Ventilsitz 2b und nachfolgend in einen Auslasskanal 2c münden. Das Poppetventil 1 umfasst eine Schliesselementhaltevorrichtung 3, welche als Gitterstruktur umfassend Streben 3b und Knoten 3d ausgestaltet ist. Das Poppetventil 1 umfasst zudem eine Mehrzahl von Schliesselementen 4, wobei an jedem Knoten 3d ein Schliesselement 4 befestigt ist. Die Schliesselementhaltevorrichtung 3 sowie die daran befestigten Schliesselemente 4 sind gemeinsam in axialer Richtung A beweglich, wobei das Poppetventil 1 eine Feder 5 umfasst, welche den Hubweg der Schliesselementhaltevorrichtung 3 begrenzt und eine Rückstellkraft erzeugt. Die Feder 5 sowie die Befestigung der Feder 5 am Ventilsitzdeckel 2 kann auf unterschiedliche Weise ausgestaltet sein, und ist im dargestellten Ausführungsbeispiel als in Umfangsrichtung des Ventilsitzdeckels 2 verlaufende Feder 5 ausgestaltet, die einerseits mit dem Ventilsitzdeckel 2 verbunden ist, und andererseits an der Schliesselementhaltevorrichtung 3 anliegt. In einer bevorzugten Ausgestaltung ist im Ventilsitzdeckel 2 ein grösserer Raum als in Figur 1 dargestellt für die Feder 5 vorgesehen, um die Feder 5 vorteilhaft bezüglich dem Ventilsitzdeckel 2 anzuordnen. Zudem kann die Verbindung zwischen Feder 5 und Schliesselementhaltevorrichtung 3 in einer Vielzahl von Möglichkeiten ausgestaltet sein.

Figur 2 zeigt das Poppetventil 1 gemäss Figur 1 ohne Schnittdarstellung.

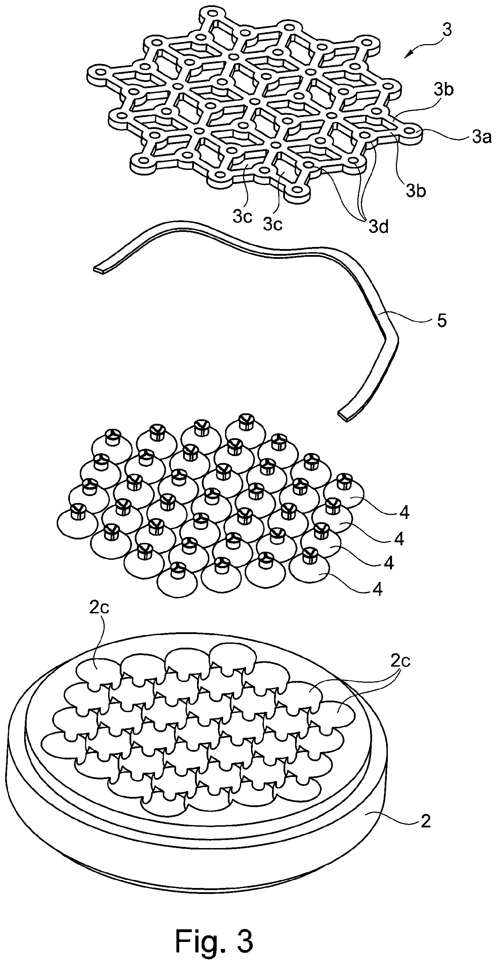

Figur 3 zeigt das Poppetventil 1 gemäss Figur 1 in einer Explosionsdarstellung. Das Poppetventil 1 umfasst den Ventilsitzdeckel 2 mit einer Mehrzahl von Auslasskanälen 2c, wobei die daran anschliessenden Ventilsitze 2b und Einlasskanäle 2a nicht dargestellt bzw. nicht sichtbar sind. Das dargestellte Ausführungsbeispiel umfasst siebenunddreissig Auslasskanäle 2c, wobei jedem Auslasskanal 2c ein Schliesselement 4 zugeordnet ist, sodass das dargestellte Poppetventil siebenunddreissig Schliesselemente 4 umfasst. Das Poppetventil 1 umfasst zudem eine gitterförmige Schliesselementhaltevorrichtung 3, wobei die Knoten 3d derart angeordnet sind, dass die daran befestigten Schliesselemente 4 jeweils gegenüberliegend des entsprechenden Ventilsitzes 2b zu liegen kommen. Das Poppetventil 1 umfasst zudem eine wellenförmig verlaufende Feder 5.

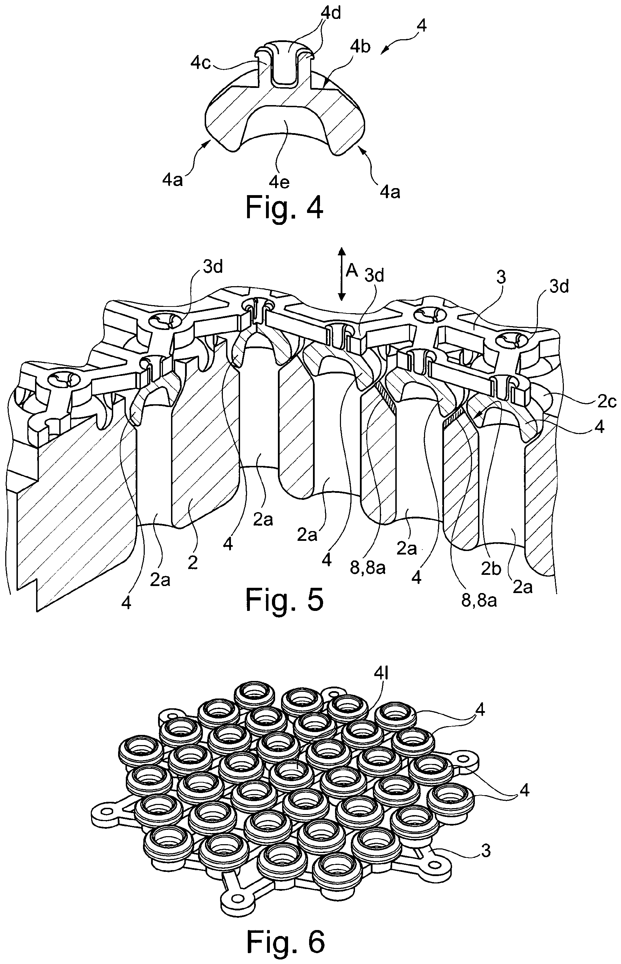

Figur 4 zeigt ein Schliesselement 4 des Poppetventils gemäss Figur 1 im Schnitt. Das dargestellte Schliesselement 4 ist aus einem Kunststoff gefertigt, beispielsweise PTFE (Polytetrafluorethylen), POM (Polyoxymethylen), PEEK (Polyetheretherketon). Das Schliesselement 4 umfasst einen Schliesskopf 4a bzw. eine Anlagefläche, welche zur Auflage am Ventilsitz bestimmt ist. Das Schliesselement 4 umfasst zudem eine Auflagefläche 4b zur Auflage an der Schliesselementhaltevorrichtung 3. Das Schliesselement 4 umfasst zudem ein Befestigungsmittel 4c, im dargestellten Ausführungsbeispiel ausgestaltet als ein Clip umfassend drei Federarme 4d. Das Schliesselement 4 kann zudem eine Ausnehmung 4e umfassen, welche es ermöglicht das Gesamtgewicht des Schliesselementes 4 zu reduzieren. Das dargestellte Schliesselement 4 könnte auch aus Metall gefertigt sein, beispielsweise Kupfer-, Stahl- oder Leichtmetalllegierungen.

Figur 5 zeigt den in Figur 1 dargestellten Schnitt im Detail. Figur 5 zeigt andeutungsweise noch ein weiteres Ausführungsbeispiel indem an einem Ventil 2b ein Dämpfungselement 8a dargestellt ist. Insbesondere dann, wenn die Schliesselemente 4 aus Metall gefertigt sein, erweist sich ein Dämpfungselement 8a als vorteilhaft, wobei das Dämpfungselement 8a vorteilhafterweise auswechselbar ist, und vorteilhafterweise als ein auswechselbarer Ventilsitz ausgestaltet ist, wobei das Dämpfungselement 8a vorzugsweise aus einem Kunststoff besteht. In einer vorteilhaften Ausgestaltung könnte jeder Ventilsitz 2a ein separates Dämpfungselement 8a umfassen. In einer weiteren vorteilhaften Ausgestaltung könnten alle Dämpfungselemente 8a durch eine gemeinsame Sitzplatte 8 ausgebildet sein, wobei die Sitzplatte 8 vorzugsweise auf den Ventilsitzdeckel 2 auflegbar ist, und an jedem Ventilsitz 2a ein Dämpfungselement 8a ausbildet. Diese Sitzplatte 8 ist vorzugsweise austauschbar und besteht vorteilhafterweise aus einem Kunststoff. Die gemeinsame Sitzplatte 8 oder die einzelnen Dämpfungselemente 8a könnten auch als gehärtete Sitze ausgestaltet sein und beispielweise aus einem Metall gefertigt sein. Solche gehärtete Sitze sind insbesondere in Kombination mit Schliesselementen umfassend oder bestehend aus Kunststoff vorteilhaft.

Figur 6 zeigt die beweglichen Teile des in Figur 1 dargestellten Poppetventils 1, nämlich die Schliesselementhaltevorrichtung 3 sowie die daran befestigten Schliesselemente 4. Alle Schliesselemente 4 sind symmetrisch bezüglich dem mittigen Schliesselement 41 angeordnet. Diese symmetrische Anordnung weist den Vorteil auf, dass die Summe aller seitlich auf die Schliesselemente 4 wirkenden Kräfte, insbesondere die senkrecht zur Bewegungsrichtung A wirkenden Kräfte, sich im Wesentlichen und vorzugsweise vollständig ausgleichen beziehungsweise sich gegenseitig kompensieren. Dies ergibt den Vorteil, dass die in zur Bewegungsrichtung A senkrechten Richtung auf die Federn 5 wirkenden Kräfte gering sind, sodass diese Kräfte keine oder eine nur geringe Verschleisswirkung auf die Federn 5 ausüben.

Aus Figur 6 ist zu dem ersichtlich, dass das erfindungsgemässe Poppetventil 1 sehr wartungsfreundlich ist. Einzelne beschädigte Schliesselemente 4 können auf einfache Weise von der Schliesselementhaltevorrichtung 3 getrennt und durch ein neues Schliesselement 4 ersetzt werden, indem das neue Schliesselement 4 über die Clipverbindung 4d an dem entsprechenden Knoten 3d befestigt wird. Zudem ist es auf einfache Weise möglich die gesamte Schliesselementhaltevorrichtung 3 mit allen daran befestigten Schliesselement 4 gesamthaft auszutauschen. Eine solche Wartung kann sehr kostengünstig durchgeführt werden, insbesondere auch deshalb, weil die Schliesselementhaltevorrichtung 3 einfach zugänglich ist.

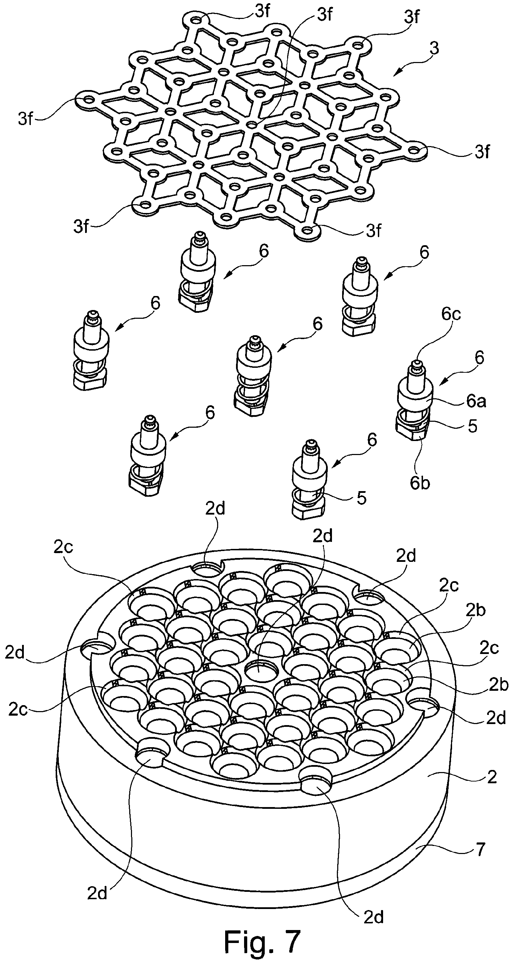

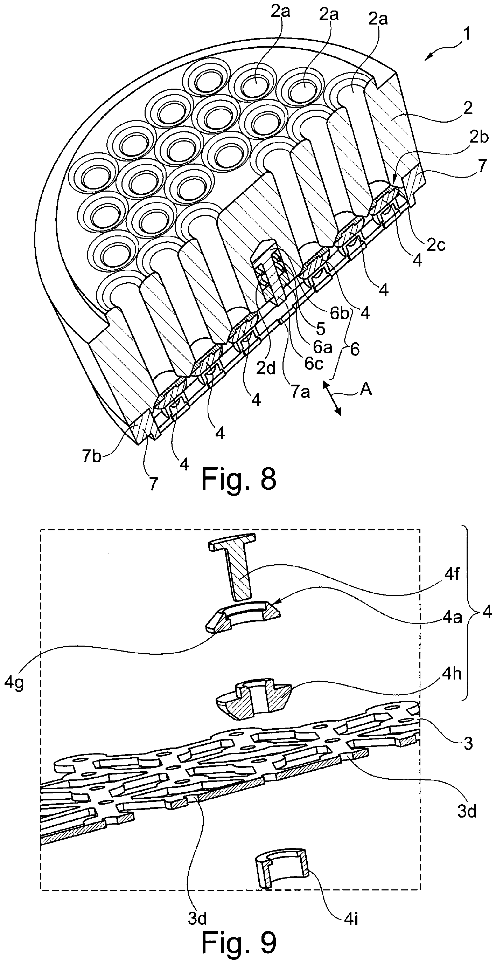

Figur 7 zeigt in einer Explosionszeichnung ein zweites Ausführungsbeispiel eines Poppetventil 1, wobei die Schliesselemente 4 nicht dargestellt sind. Die Schliesselementhaltevorrichtung 3 ist identisch ausgestaltet wie im ersten Ausführungsbeispiel, was insbesondere aus Figur 3 ersichtlich ist. Die Schliesselemente 4 könnten dieselben sein, wie in Figur 3 dargestellt, mit Ausnahme, dass im Zentrum der Schliesselementhaltevorrichtung 3 gemäss Figur 7 kein Schliesselement 4 befestigt ist. Der Ventilsitzdeckel 2 umfasst eine Mehrzahl von nicht sichtbaren Einlasskanälen 2a, welche jeweils in den Ventilsitz 2b sowie den entsprechenden Auslasskanal 2c münden. Der Ventilsitzdeckel 2 umfasst entlang des Umfangs sechs gegenseitig beanstandet angeordnete Sackbohrungen 2d und umfasst zudem eine in der Mitte angeordnete Sackbohrung 2d. In diesen Sackbohrungen 2d ist je ein Führungsteil 6 angeordnet. Jedes Führungsteil 6 ist mit der Schliesselementhaltevorrichtung 3 verbunden, und gewährleistet die Bewegung der Schliesselementhaltevorrichtung 3 in axialer Richtung A bezüglich dem Ventilsitzdeckel 2. Das Führungsteil 6 umfasst ein Befestigungsteil 6a, welches in der Sackbohrung 2d befestigt wird, und umfasst ein Endteil 6b, welches mit einer Längsachse 6c fest verbunden ist. Zwischen dem Befestigungsteil 6a und dem Endteil 6b ist eine Feder 5 angeordnet. Das Endteil 6b ist in der Sackbohrung 2d in axialer Richtung A beweglich angeordnet, und der obere Endabschnitt der Längsachse 6c ist mit der Schliesselementhaltevorrichtung 3 über die Befestigungsstelen 3f verbunden, sodass das Führungsteil 6 einerseits fest im Ventilsitzdeckel 2 angeordnet ist, und die Längsachse 6c und die damit verbundene Schliesselementhaltevorrichtung 3 in axialer Richtung A beweglich gelagert ist. Diese Ausgestaltung weist den Vorteil auf, dass die Schliesselementhaltevorrichtung 3 in axialer Richtung A präzise geführt ist. In einer möglichen Ausführungsform sind die Schliesselemente 4 wie in Figur 4 dargestellt ausgestaltet. Vorteilhafterweise sind die Schliesselemente 4 wie in Figur 9 dargestellt ausgestaltet. Die Führungsteile 6 können in einer Vielzahl von Möglichkeiten ausgestaltet sein, um eine Führung der Schliesselementhaltevorrichtung 3 in axialer Richtung A zu gewährleisten.

Figur 8 zeigt einen Längsschnitt durch das Poppetventil 1 gemäss Figur 7, unter Verwendung des in Figur 9 dargestellten Schliesselementes 4. Der Längsschnitt gemäss Figur 8 zeigt eine Mehrzahl von Einlasskanälen 2a, wobei jeder Einlasskanal 2a in einen Ventilsitz 2b und anschliessend in einen Auslasskanal 2c mündet. Im Zentrum des Ventilsitzdeckels 2 ist die Sackbohrung 2d dargestellt, in welcher das Führungsteil 6 angeordnet ist, um die Schliesselementhaltevorrichtung 3 in axialer Richtung A beweglich zu führen, und um über die Feder 5 eine zum Ventilsitzdeckel 2 hin gerichtete Vorspannkraft bzw. Rückstellkraft auf die Schliesselementhaltevorrichtung 3 zu bewirken. In einer vorteilhaften Ausgestaltung umfasst das Poppetventil 1 zudem einen Fänger 7, der vorteilhafterweise ein in Umfangsrichtung verlaufendes Befestigungsteil 7b umfasst, welches mit dem Ventilsitzdeckel 2 verbunden ist, und der vorteilhafterweise zudem eine flache Gitterstuktur 7a mit Öffnungen aufweist. Der Fänger 7 dient dazu die Bewegung der Schliesselementhaltevorrichtung 3 in axialer Richtung A zu begrenzen. Vorteilhafterweise hält der Fänger 7 zudem frei bewegliche Teile, zum Beispiel abgebrochene Teile, zurück, sodass diese das Poppetventil 1 nicht verlassen können.

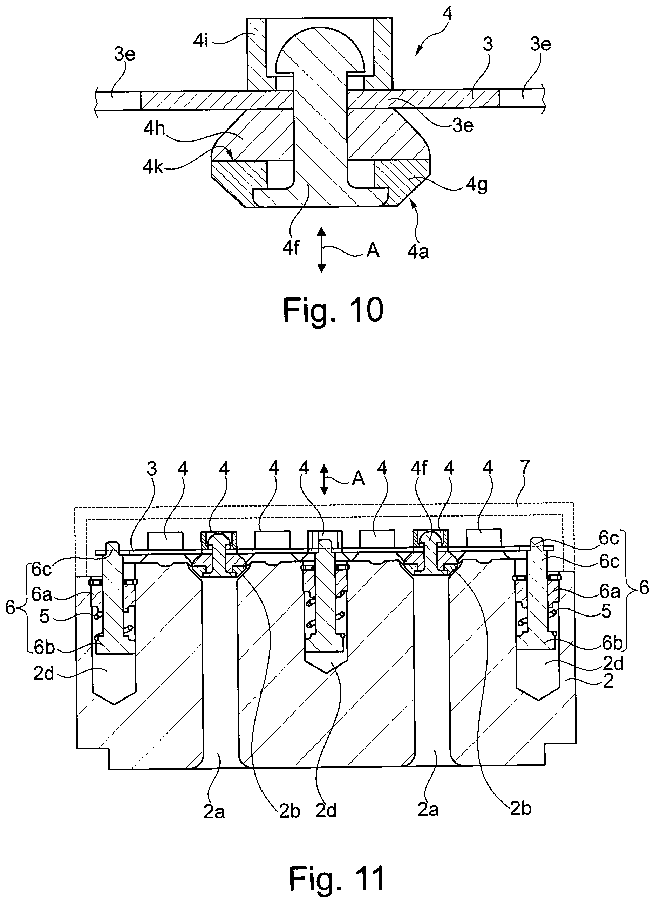

Figur 9 zeigt ein Ausführungsbeispiel eines Schliesselementes 4 vor der Montage und Figur 10 nach erfolgter Montage. Das Schliesselement 4 umfasst zumindest ein Schliessteil 4g, ein Stützteil 4h sowie eine Niete 4f und umfasst vorzugsweise zudem noch ein Distanzteil 4i. Die Niete 4f wird wie in Figur 9 dargestellt in das Schliessteil 4g und das Stützteil 4h eingeführt, anschliessend durch die Öffnung eines Knoten 3d gestossen, und anschliessend in das Distanzteil 4i eingeführt. Danach wird die Niete 4f vernietet, sodass diese die in Figur 10 dargestellte Form aufweist. In einer vorteilhaften Ausgestaltung besteht das Schliessteil 4g und das Distanzteil 4i aus einem Kunststoff, wogegen das Stützteil 4h sowie die Niete 4f aus einem Metall bestehen. Das Schliessteil 4g umfasst die Schliessfläche 4a sowie die Stützfläche 4k. Das in Figur 10 dargestellte Schliesselement 4 weist den Vorteil auf, dass das Schliessteil 4g an der Stützfläche 4k eine senkrecht zur Oberfläche des Schliessteils 4g wirkende Kraft erfährt. Das dargestellte Schliessteil 4g weist eine kegelförmige Schliessfläche 4a auf, wobei die Schliessfläche 4a im Wesentlichen eine senkrecht zur Schliessfläche 4a wirkende Kraft erfährt. Dies ergibt den Vorteil, dass auf das Schliessteil 4a bestehend aus Kunststoff im Wesentlichen Druckkräfte bewirkt werden, jedoch keine oder vernachlässigbar geringe Zugkräft, sodass im Schliessteil 4g keine oder vernachlässigbar geringe Zugspannungen auftreten, welche einen Bruch des Scleissteils 4g bewirken könnten. Diese Ausgestaltung weist somit den Vorteil auf, dass das Schliessteil 4g einen geringen Verschleiss aufweist.

Figur 11 zeigt einen weiteren Längsschnitt durch das Poppetventil 1 gemäss Figur 7, wobei der Fänger 7 nur andeutungsweise dargestellt ist. Die Schliesselementhaltevorrichtung 3 und die fest damit verbundenen Schliesselemente 4 sind durch die teilweise in der Sackbohrung 2d angeordneten Führungsteile 6 in axialer Bewegungsrichtung A beweglich gelagert. Die Schliesselemente 4 sind wie in Figur 10 im Detail dargestellt ausgestaltet. Durch die Bewegung der Schliesselemente 4 in axialer Richtung A wird der Ventilsitz 2b in Abhängigkeit der Stellung der Schliesselemente 4 geöffnet oder geschlossen. Der Fänger 7 dient unter anderem dazu, den maximal möglichen Hub der Schliesselemente 4 zu begrenzen.

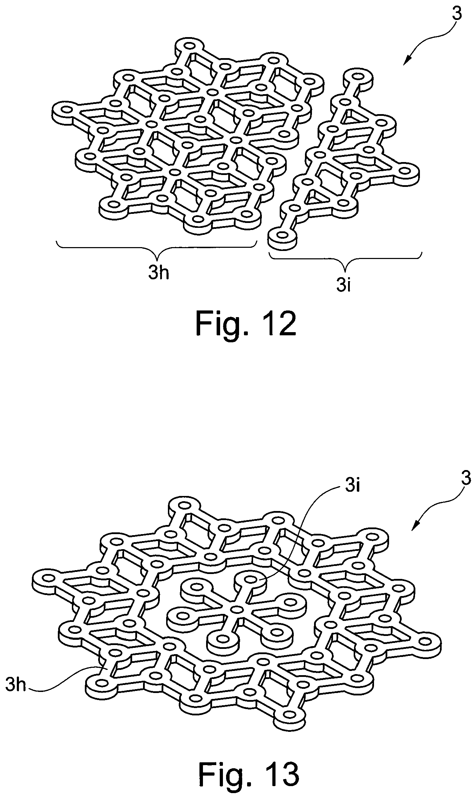

Die Figuren 12 und 13 zeigen zwei weitere Ausführungsbeispiele von Schliesselementhaltevorrichtungen 3, wobei diese, im Gegensatz zu der in Figur 3 dargestellten, aus zwei Teilen bestehen, und ein erste Schliesselementhaltevorrichtungsteil 3h und ein zweites Schliesselementhaltevorrichtungsteil 3i umfassen, wobei an beiden Schliesselementhaltevorrichtungsteilen 3i, 3h Schliesselemente 4 befestigbar sind, sodass sich zwei Gruppen von Schliesselementen 4 ergibt, wobei jede Gruppe mit einem einzigen Schliesselementhaltevorrichtungsteil 3, 3h verbunden ist. Die in Figur 12 dargestellte Schliesselementhaltevorrichtung 3 könnte ebenfalls in dem in den Figuren 1 bis 9 dargestellten Ausführungsformen verwendet werden. Die zwei Teile 3h, 3i der Schliesselementhaltevorrichtung 3 könnten auf unterschiedliche Art ausgestaltet sein, um die Schliesselemente 4 zu halten. Zudem könnte die Schliesselementhaltevorrichtung 3 zusätzliche Teile umfassen, und beispielweise aus drei, vier oder fünf Teilen bestehen. Eine Schliesselementhaltevorrichtung 3 bestehend aus mehreren Schliesselementhaltevorrichtungsteilen 3h, 3i weist den Vorteil auf, dass die Schliesselementhaltevorrichtungsteile 3h, 3i individuell quer zur Längsachse A beweglich sind, sodass ein allfälliges Spiel und/oder eine Abnutzung zwischen Schliesselement 4 und Ventilsitz 2b besser ausgeglichen werden kann.

## Patentansprüche

1. Poppetventil (1) umfassend einen Ventilsitzdeckel (2) mit einer Mehrzahl von Einlasskanälen (2a), wobei jeder Einlasskanal (2a) in einen Ventilsitz (2b) mündet, sowie umfassend eine Mehrzahl von in einer axialen Richtung (A) beweglichen Schliesselementen (4), wobei jedem Ventilsitz (2b) ein Schliesselement (4) zugeordnet ist, und wobei jeder Ventilsitz (2b) in axialer Richtung (A) gegenüber liegend dem zugeordneten Schliesselement (4) angeordnet ist, derart, dass jeder Ventilsitz (2b) durch das zugeordnete Schliesselement (4) verschliessbar ist, **dadurch gekennzeichnet, dass** alle Schliesselemente (4) an einer Schliesselementhaltevorrichtung (3) angeordnet sind, und dass die Schliesselementhaltevorrichtung (3) derart in axialer Richtung (A) beweglich ist, dass die Schliesselemente (4) zumindest zwei Stellungen einnehmen können, eine Offenstellung, bei welcher die Schliesselemente (4) bezüglich den Ventilsitzen (2b) angehoben sind, und eine Geschlossenstellung, bei welcher die Schliesselemente (4) an den Ventilsitzen (2b) anliegen.

2. Poppetventil nach Anspruch 1, **dadurch gekennzeichnet, dass** die Schliesselementhaltevorrichtung (3) zumindest zwei separate Schliesselementhaltevorrichtungsteile (3h, 3i) umfasst.

3. Poppetventil nach Anspruch 1 oder 2, **dadurch gekennzeichnet, dass** die Schliesselementhaltevorrichtung (3) flächig und fluiddurchlässig ausgestaltet ist.

4. Poppetventil nach Anspruch 3, **dadurch gekennzeichnet, dass** die Schliesselementhaltevorrichtung (3) als zweidimensionale Gitterstruktur ausgestaltet ist, dass die Gitterstruktur Streben (3b) und Knoten (3d) umfasst, und dass die Schliesselemente (4) an den Knoten (3d) angeordnet sind.

5. Poppetventil nach einem der vorhergehenden Ansprüche, **dadurch gekennzeichnet, dass** die Schliesselemente (4) gegenseitig symmetrisch an der Schliesselementhaltevorrichtung (3) angeordnet sind.

6. Poppetventil nach einem der vorhergehenden Ansprüche, **dadurch gekennzeichnet, dass** die Schliesselementhaltevorrichtung (3) über zumindest eine Feder (5) am Ventilsitzdeckel (2) gelagert ist, wobei die Feder (5) zumindest in axialer Richtung (A) auslenkt.

7. Poppetventil nach einem der vorhergehenden Ansprüche, **dadurch gekennzeichnet, dass** die Schliesselementhaltevorrichtung (3) über zumindest ein in axialer Richtung (A) bewegliches Führungsteil (6) mit dem Ventilsitzdeckel (2) verbunden ist.

8. Poppetventil nach Anspruch 7, **dadurch gekennzeichnet, dass** der Ventilsitzdeckel (2) zumindest eine in axialer Richtung (A) verlaufende Bohrung (2d) aufweist, und dass in jeder Bohrung (2d) ein Führungsteil (6) angeordnet ist.

9. Poppetventil nach einem der vorhergehenden Ansprüche, **dadurch gekennzeichnet, dass** die Schliesselemente (4) zumindest teilweise aus Kunststoff bestehen.

10. Poppetventil nach Anspruch 9, **dadurch gekennzeichnet, dass** das Schliesselement (4) über eine Clipverbindung mit der Schliesselementhaltevorrichtung (3) verbunden ist.

11. Poppetventil nach Anspruch 9 oder 10, **dadurch gekennzeichnet, dass** das Schliesselement (4) aus zumindest zwei unterschiedlichen Materialien besteht, einem Metall und einem Kunststoff.

12. Poppetventil nach Anspruch 11, **dadurch gekennzeichnet, dass** das Schliesselement (4) ein Schliessteil (4g) umfasst, welches derart angeordnet ist, dass dieses bei geschlossenem Einlasskanal (2a) am Ventilsitz (2b) anliegt, und dass das Schliessteil (4g) aus einem Kunststoff besteht.

13. Poppetventil nach Anspruch 12, **dadurch gekennzeichnet, dass** das Schliesselement (4) ein metallisches Stützteil (4h) umfasst, dass das Stützteil (4h) eine senkrecht zur axialen Richtung (A) verlaufende Stützfläche (4k) aufweist, dass das Schliessteil (4g) an der Stützfläche (4k) anliegt, und dass das Schliessteil (4g) zwischen der Stützfläche (4k) und dem Ventilsitz (2b) angeordnet ist.

14. Poppetventil nach einem der vorhergehenden Ansprüche, **dadurch gekennzeichnet, dass** dieses einen Fänger (7) umfasst, und dass der Fänger (7) in axialer Richtung (A) derart beabstandet zur Schliesselementhaltevorrichtung (3) angeordnet ist, dass die Schliesselementhaltevorrichtung (3) in axialer Richtung (A) beweglich ist.

15. Poppetventil nach Anspruch 14, **dadurch gekennzeichnet, dass** das Schliesselement (4) ein Distanzteil (4i) umfasst, welches in axialer Richtung (A) zum Fänger (7) hin über die Schliesselementhaltevorrichtung (3) vorsteht, und dass das Schliesselement (4) und der Fänger (7) derart gegenseitig angepasst angeordnet sind, dass die maximale Bewegung des Schliesselementes (4) in axialer Richtung (A) durch den Fänger (7) begrenzt ist.

## Claims

1. A poppet valve (1) comprising a valve seat cover (2) having a plurality of inlet channels (2a), wherein each inlet channel (2a) opens into a valve seat (2b), and comprising a plurality of closing elements (4), which are movable in an axial direction (A), wherein a closing element (4) is associated with each valve seat (2b), and wherein each valve seat (2b) is arranged opposite the associated closing element (4) in the axial direction (A), such that each valve seat (2b) is closable by the associated closing element (4), **characterized in that** all the closing elements (4) are arranged on a common closing element holding device (3), and **in that** the closing element holding device (3) is movable in the axial direction (A) in such a way that the closing elements (4) can assume at least two positions, an open position, in which the closing elements (4) are raised relative to the valve seats (2b), and a closed position, in which the closing elements (4) rest against the valve seats (2b).

2. The poppet valve as claimed in claim 1, **characterized in that** the closing element holding device (3) comprises at least two separate closing element holding device parts (3h, 3i).

3. The poppet valve as claimed in claim 1 or 2, **characterized in that** the closing element holding device (3) is of flat and fluid-permeable configuration.

4. The poppet valve as claimed in claim 3, **characterized in that** the closing element holding device (3) is embodied as a two-dimensional grid structure, **in that** the grid structure comprises struts (3b) and nodes (3d), and **in that** the closing elements (4) are arranged on the nodes (3d) .

5. The poppet valve as claimed in any one of the preceding claims, **characterized in that** the closing elements (4) are arranged in mutual symmetry on the closing element holding device (3) .

6. The poppet valve as claimed in any one of the preceding claims, **characterized in that** the closing element holding device (3) is supported on the valve seat cover (2) by means of at least one spring (5), wherein the spring (5) deflects at least in the axial direction (A).

7. The poppet valve as claimed in any one of the preceding claims, **characterized in that** the closing element holding device (3) is connected to the valve seat cover (2) by means of at least one guide part (6) movable in the axial direction (A).

8. The poppet valve as claimed in claim 7, **characterized in that** the valve seat cover (2) has at least one hole (2d) extending in the axial direction (A), and **in that** a guide part (6) is arranged in each hole (2d).

9. The poppet valve as claimed in any one of the preceding claims, **characterized in that** the closing elements (4) consist at least partially of plastic.

10. The poppet valve as claimed in claim 9, **characterized in that** the closing element (4) is connected to the closing element holding device (3) by means of a clip joint.

11. The poppet valve as claimed in claim 9 or 10, **characterized in that** the closing element (4) consists of at least two different materials, a metal and a plastic.

12. The poppet valve as claimed in claim 11, **characterized in that** the closing element (4) comprises a closing part (4g), which is arranged in such a way that, when the inlet channel (2a) is closed, said closing part rests on the valve seat (2b), and **in that** the closing part (4g) consists of a plastic.

13. The poppet valve as claimed in claim 12, **characterized in that** the closing element (4) comprises a metallic supporting part (4h), **in that** the supporting part (4h) has a supporting surface (4k) extending perpendicularly to the axial direction (A), **in that** the closing part (4g) rests on the supporting surface (4k), and **in that** the closing part (4g) is arranged between the supporting surface (4k) and the valve seat (2b).

14. The poppet valve as claimed in any one of the preceding claims, **characterized in that** said valve comprises a catcher (7), and **in that** the catcher (7) is arranged at such a distance from the closing element holding device (3) in the axial direction (A) that the closing element holding device (3) is movable in the axial direction (A).

15. The poppet valve as claimed in claim 14, **characterized in that** the closing element (4) comprises a distance piece (4i), which projects beyond the closing element holding device (3) toward the catcher (7) in the axial direction (A), and **in that** the closing element (4) and the catcher (7) are arranged so as to match one another in such a way that the maximum movement of the closing element (4) in the axial direction (A) is limited by the catcher (7).

## Revendications

1. Soupape à clapet (1) comportant un couvercle de siège de soupape (2) doté d'une pluralité de canaux d'entrée (2a), dans laquelle chaque canal d'entrée (2a) débouche dans un siège de soupape (2b), et comportant une pluralité d'éléments de fermeture (4) mobiles dans une direction axiale (A), dans laquelle un élément de fermeture (4) est associé à chaque siège de soupape (2b), et dans laquelle chaque siège de soupape (2b) est disposé en regard de l'élément de fermeture (4) associé dans la direction axiale (A), de telle sorte que chaque siège de soupape (2b) puisse être fermé au moyen de l'élément de fermeture (4) associé, **caractérisée en ce que** tous les éléments de fermeture (4) sont disposés sur un dispositif de retenue d'éléments de fermeture (3), et **en ce que** le dispositif de retenue d'éléments de fermeture (3) est mobile dans la direction axiale (A) de telle sorte que les éléments de fermeture (4) puissent adopter au moins deux positions, à savoir une position ouverte dans laquelle les éléments de fermeture (4) sont soulevés par rapport aux sièges de soupape (2b) et une position fermée dans laquelle les éléments de fermeture (4) s'appuient contre les sièges de soupape (2b).

2. Soupape à clapet selon la revendication 1, **caractérisée en ce que** le dispositif de retenue d'éléments de fermeture (3) comporte au moins deux parties séparées de dispositif de retenue d'éléments de fermeture (3h, 3i).

3. Soupape à clapet selon la revendication 1 ou 2, **caractérisée en ce que** le dispositif de retenue d'éléments de fermeture (3) est configuré de manière plane et perméable aux fluides.

4. Soupape à clapet selon la revendication 3, **caractérisée en ce que** le dispositif de retenue d'éléments de fermeture (3) est configuré sous forme de structure formant grille bidimensionnelle, **en ce que** la structure formant grille comporte des entretoises (3b) et des noeuds (3d), et **en ce que** les éléments de fermeture (4) sont disposés au niveau des noeuds (3d).

5. Soupape à clapet selon l'une des revendications précédentes, **caractérisée en ce que** les éléments de fermeture (4) sont disposés de manière mutuellement symétrique sur le dispositif de retenue d'éléments de fermeture (3).

6. Soupape à clapet selon l'une des revendications précédentes, **caractérisée en ce que** le dispositif de retenue d'éléments de fermeture (3) est monté sur le couvercle de siège de soupape (2) par le biais d'au moins un ressort (5), le ressort (5) fléchissant au moins dans la direction axiale (A).

7. Soupape à clapet selon l'une des revendications précédentes, **caractérisée en ce que** le dispositif de retenue d'éléments de fermeture (3) est relié au couvercle de siège de soupape (2) par le biais d'au moins une partie de guidage (6) mobile dans la direction axiale (A).

8. Soupape à clapet selon la revendication 7, **caractérisée en ce que** le couvercle de siège de soupape (2) comprend au moins un alésage (2d) s'étendant dans la direction axiale (A), et **en ce qu'**une partie de guidage (6) est disposée dans chaque alésage (2d).

9. Soupape à clapet selon l'une des revendications précédentes, **caractérisée en ce que** les éléments de fermeture (4) sont constitués au moins partiellement de matière synthétique.

10. Soupape à clapet selon la revendication 9, **caractérisée en ce que** l'élément de fermeture (4) est relié au dispositif de retenue d'éléments de fermeture (3) par le biais d'une liaison par enclipsage.

11. Soupape à clapet selon la revendication 9 ou 10, **caractérisée en ce que** l'élément de fermeture (4) est constitué d'au moins deux matériaux différents, à savoir un métal et une matière synthétique.

12. Soupape à clapet selon la revendication 11, **caractérisée en ce que** l'élément de fermeture (4) comporte une partie de fermeture (4g), laquelle est disposée de manière à s'appuyer contre le siège de soupape (2b) lorsque le canal d'entrée (2a) est fermé, et **en ce que** la partie de fermeture (4g) est constituée d'une matière synthétique.

13. Soupape à clapet selon la revendication 12, **caractérisée en ce que** l'élément de fermeture (4) comprend une partie d'appui (4h) métallique, **en ce que** la partie d'appui (4h) comprend une surface d'appui (4k) s'étendant perpendiculairement à la direction axiale (A), **en ce que** la partie de fermeture (4g) s'appuie contre la surface d'appui (4k), et **en ce que** la partie de fermeture (4g) est disposée entre la surface d'appui (4k) et le siège de soupape (2b).

14. Soupape à clapet selon l'une des revendications précédentes, **caractérisée en ce que** celle-ci comporte un élément de retenue (7), et **en ce que** l'élément de retenue (7) est disposé de manière espacée du dispositif de retenue d'éléments de fermeture (3) dans la direction axiale (A), de telle sorte que le dispositif de retenue d'éléments de fermeture (3) soit mobile dans la direction axiale (A).

15. Soupape à clapet selon la revendication 14, **caractérisée en ce que** l'élément de fermeture (4) comporte une partie d'écartement (4i), laquelle fait saillie au-delà du dispositif de retenue d'éléments de fermeture (3) vers l'élément de retenue (7) dans la direction axiale (A), et **en ce que** l'élément de fermeture (4) et l'élément de retenue (7) sont disposés de manière mutuellement adaptée de telle sorte que le déplacement maximal de l'élément de fermeture (4) dans la direction axiale (A) soit limité par l'élément de retenue (7).
